# EUROPÄISCHE PATENTSCHRIFT

(11) **EP 0 287 791 B1**
(45) Veröffentlichungstag und Bekanntmachung des Hinweises auf die Patenterteilung: **23.06.1993**
(21) Anmeldenummer: 88103479.7
(22) Anmeldetag: 05.03.1988
(51) Int. Cl.: F16L 37/08

(54) **Steckkupplung**
Plug-in coupling
Raccord enfichable

(30) Priorität: 18.04.1987 DE 3713200
(43) Veröffentlichungstag der Anmeldung: 26.10.1988
(73) Patentinhaber: Techno-Chemie Kessler & Co. GmbH, 61184 Karben (DE)
(72) Erfinder: Müller, Josef, D-6390 Usingen 2 (DE); Vogel, Gert, D-6120 Michelstadt (DE)
(74) Vertreter: Schieferdecker, Lutz, Dipl.-Ing.

(56) Entgegenhaltungen:
- EP-A- 0 140 995
- EP-A- 0 185 802
- DE-A- 2 856 069
- DE-A- 3 533 619
- DE-C- 2 824 943
- GB-A- 2 104 607

## Beschreibung

Die Erfindung betrifft eine Steckkupplung gemäß Oberbegriff des Auspruches 1 und wird vor allem zum Verbinden von Öl- und Kraftstoffleitungen in Fahrzeugen sowie in vielen weiteren Anwendungsgebieten benutzt.

Bekannt sind Steckkupplungen der hier interessierenden Art ferner aus der DE-A-28 56 069 bzw. aus der DE-C-28 24 943, wobei in dieser zuletzt genannten Druckschrifft ein Schiebe- und Haltering keine radial bewegbaren Federarme aufweist, zusätzlich aber ein Spreizring vorgesehen ist, der die axial gerichteten Kräfte überträgt. Bei den bekannten Konstructionen ist jeweils eine Feder in Gestalt einer Tellerfeder oder in Form einer sich verjüngenden Schraubenfeder vorgesehen, damit der zum Kuppeln und Entkuppeln dienende Schiebe- und Haltering in seiner Kupplungsstellung gehalten wird. Gegen die Kraft dieser Federn wird der Schiebe- und Haltering jeweils verschoben, wenn das Kupplungsmundstück mit dem Kupplungsgehäuse gekuppelt werden soll oder ein Entkuppeln notwendig ist.

Der Erfindung liegt die Aufgabe zugrunde, Maßnahmen vorzusehen, so daß es möglich ist, auf die für den Kupplungs- bzw. Entkupplungsvorgang jeweils wichtige Feder zu verzichten.

Zur Lösung dieser Aufgabe sieht die Erfindung vor, daß die Federarme am Schiebe- und Haltering eine radial einwärts auf das Kupplungsmundstück hin gerichtete Federspannung aufweisen aufgrund der sie formschlüssig die Halteflächen hintergreifen und daß radial nach außen gerichtete Erhebungen an den Federarmen zur Festlegung im gekuppelten Zustand vorgesehen sind. Die Federarme greifen daher mit den an ihnen befindlichen Vorsprüngen auf Grund ihrer eigenen Federspannung formschlüssig in Hinterschnitte am Kupplungsmundstück und werden zum Entkuppeln aus dieser Stellung herausgehoben. Dies ermöglicht eine einfache Bauart und den Verzicht auf eine besondere Haltefeder, die verhindern muß, daß z.B. durch Erschütterungen auftretende Lageveränderungen zu einem selbsttätigen Entkuppeln der einzelnen Teile der Steckkupplung führen. Die gefundene Bauform ermöglicht ferner eine sehr einfache Montage auch unter Zuhilfenahme mechanischer Einrichtungen wie z.B. Robotern u. dgl.

Weiterbildungen und zweckmäßige Ausgestaltungen der Erfindung gehen aus der Beschreibung und den Unteransprüchen im Zusammenhang mit der Zeichnung hervor.

Die Erfindung wird nachstehend anhand von Ausführungsbeispielen, die in den Figuren dargestellt sind, näher beschrieben. Dabei zeigen:
- Fig. 1:: im Schnitt eine Hälfte eines Steckers oder Mundstückes der Steckkupplung mit einem aufgesetzten Schiebe- und Haltering sowie einem Hilfsring;
- Fig. 2:: im Schnitt das Kupplungsgehäuse, wobei rechts in Fig. 2 eine Montagestellung und links in Fig. 2 die Kupplungsstellung dargestellt sind und
- Fig. 3:: im Schnitt sowie in größerem Maßstab das Kupplungsgehäuse, wobei links in Fig. 3 die Kupplungsstellung wie in Fig. 2 links und rechts in Fig. 3 eine Entkupplungs- bzw. Freigabestellung dargestellt sind.
- Fig. 4:: einen Schnitt wie in Fig. 1 durch ein abgewandeltes Ausführungsbeispiel ohne Hilfsring.

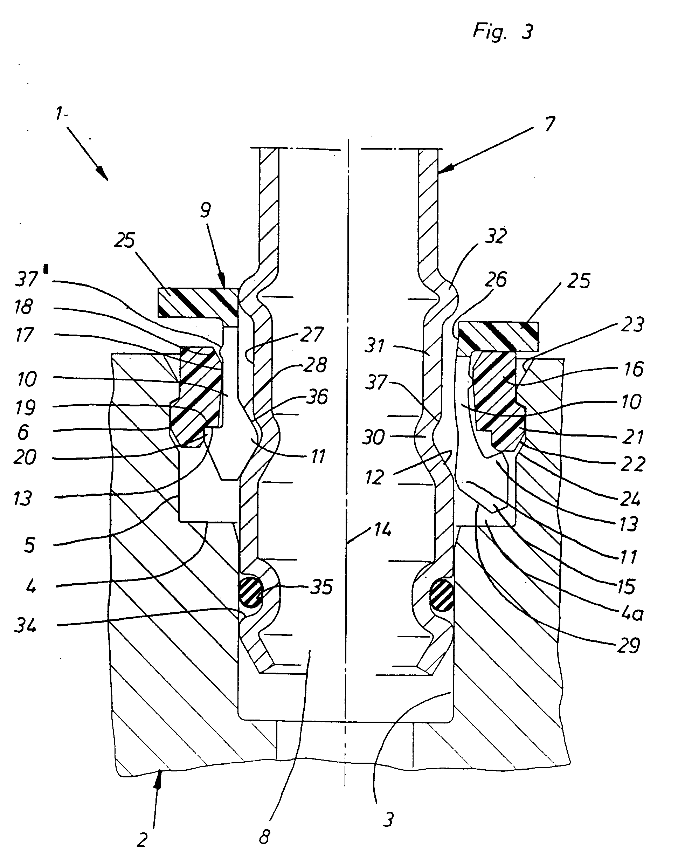

Eine Steckkupplung 1 zum axialen Verbinden von Schläuchen, Rohren, hülsenförmigen Körpern u. dgl. umfaßt gemäß Fig. 3 ein Kupplungsgehäuse 2 mit einer abgestuften Gehäusebohrung 3, die einen Absatz 4 und in einem Bohrungsteil 5 mit großem Durchmesser eine ringförmige Rastnut 6 aufweist. Ferner gehört zur Steckkupplung 1 ein rohrförmiges Kupplungsmundstück 7, dessen freies Ende 8 sich mit dem Kupplungsgehäuse 2 kuppeln bzw. entkuppeln läßt, wozu es in die Gehäusebohrung 3 gesteckt oder aus dieser herausgezogen wird.

Das Kupplungsmundstück 7 ist in den Figuren abgebrochen dargestellt und kann sich in einem Rohr, einem Schlauch oder dgl. bzw. in einer hier nicht näher interessierenden Art und Weise fortsetzen. Auch das Kupplungsgehäuse 2 ist in den Figuren abgebrochen wiedergegeben und nicht auf eine bestimmte äußere Kontur beschränkt. In der Regel ist das Kupplungsgehäuse 2 in ein zu verbindendes Aggregat integriert, kann aber auch mit einem Schlauch oder Rohr verbunden sein.
Zum Kuppeln und Entkuppeln des Kupplungsmundstückes 7 mit dem Kupplungsgehäuse 2 dient ein Schiebe- und Halterung 9, der sich axial erstreckende und radial bewegbare Federarme 10 aufweist. Jeder Federarm 10 trägt einen radial einwärts gerichteten Vorsprung 11, der eine radial gerichtete Haltefläche 12 außen am Kupplungsmundstück 7 formschlüssig hintergreift und ferner stützt sich jeder Federarm 10 mit einer Außenfläche 13 zum Kupplungsgehäuse 2 hin ab. Die Außenfläche 13 ist bei dem dargestellten Ausführungsbeispiel am Federarm 10 rein radial auswärts gerichtet, während die wirksame Fläche am Vorsprung 11 des Federarmes 10 schräg zur Hauptachse 14 des Kupplungsmundstückes 7 verläuft. Die Haltefläche 12 wird gebildet durch einen schrägen Absatz bzw. eine Einschnürung des rohrförmigen Kupplungsmundstückes 7, das im Bereich seines freien Endes 8 einen großen Durchmesser und im Bereich der Federarme 10 einen geringeren Außendurchmesser besitzt.

Die Haltefläche 12 ist eine kegelstumpfförmige Fläche und divergiert zum freien Ende 8 hin. Dies hat zur Folge, daß die Federarme 10 radial auswärts gedrückt werden, wenn sie bzw. der gesamte Schiebe- und Halterung 9 axial zum freien Ende 8 aus der Postion links in Fig. 3 in die Position rechts in Fig. 3 verschoben werden.

Dabei treten die freien Enden 15 der Federarme 10 mit ihrem Vorsprung 11 und ihrer radial gerichteten Außenfläche 13 in einen durch den Absatz 4 der abgestuften Gehäusebohrung 3 geschaffenen Freiraum 4a mit der Folge, daß sich das Mundstück 7 aus dem Kupplungsgehäuse 2 ziehen bzw. die Steckkupplung 1 gemäß der Darstellung in der rechten Hälfte von Fig. 3 entkuppeln läßt.

Verbunden mit dem Entkupplungsvorgang ist nicht nur eine geringfügige, zunächst axial einwärts gerichtete Verschiebung des Schiebe-und Halteringes 9, sondern auch eine entsprechend axial einwärts in das Kupplungsgehäuse 2 gerichtete Bewegung des Kupplungsmundstückes 7. Diese Bewegung ist erforderlich, damit die radial gerichteten Außenflächen 13 an den Federarmen 10 außer Eingriff mit dem sie axial und radial auswärts haltenden Teil gelangen.

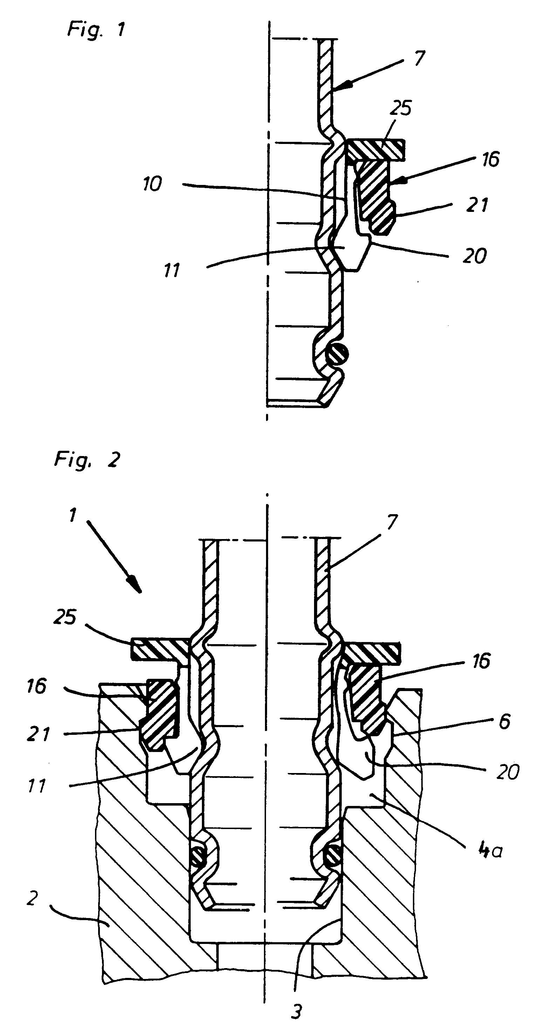

Bei dem in den Figurel 1 - 3 dargestellten Ausführungsbeispiel dient ein Hilfsring 16 zur Übertragung der im gekuppelten Zustand auftretenden Kräfte. Dieser Hilfsring 16 besitzt eine Bohrung 17 mit einer kleinen, nach außen divergierenden Einlaufschräge 18 für die Federarme 10. Die länge der Federarme 10 und die axiale Länge des Hilfsringes 16 sind so gewählt, daß die Federarme 10 mit ihren freien Enden 15 und den dort befindlichen, hintergreifenden Außenflächen 13 bis hinter den Hilfsring 16 bewegbar sind (Fig. 2 bzw. Fig. 3 rechts).
Die Bohrung 17 weist ferner an ihrem der Einlaufschräge 18 abgewandten Ende einen Absatz 19 auf. Zwischen der Einlaufschräge 18 und dem Absatz 19 ist die Bohrung 17 vorzugsweise leicht konisch, wobei sie zum Absatz 19 hin divergiert. Der Hilfsring 16 umgreift im Bereich des Absatzes 19 eine Haltenase 20 am Federam 10, wobei eine Begrenzungsfläche dieser Haltenase 20 die bereits oben erwähnte, radial gerichtete Außenfläche 13 am Federarm 10 ist, welche die axial gerichteten Öffnungskräfte der Steckkupplung 1 aufnimmt.

An seinem Außenumfang ist der Hilfsring 16 mit einer umlaufenden Rippe 21 versehen, die mindestens gehäuseseitig eine konische Schrägfläche 22 aufweist. Mit der Rippe 21 greift der Hilfsring 16 in die Rastnut 6. Die Schrägfläche 22 dient zum Einsetzen des Hilfsringes 16 in die Gehäusebohrung 3, die an ihrem stirnseitigen Ende hierzu auch eine Einlaufschräge 23 aufweist. Der Schrägfläche 22 am Hilfsring 16 ist in der Rastnut 6 eine schräg stehende Nutbegrenzungswand 24 zugeordnet, wobei die Abmessungen der Rastnut 6 derart gewählt sind, daß die Rippe 21 vorzugsweise mit etwas axial gerichtetem Spiel in die Rastnut 6 greift.

Der Außendurchmesser der Rippe 21 ist größer als der Durchmesser der Gehäusebohrung 3 axial auswärts neben der Rastnut 6. Beim Einsetzen verformt sich daher der Hilfsring 16 und besteht zu diesem Zweck aus einem verformbaren Kunststoff wie z.B. Polyamid oder Polycarbonat oder Ähnliches.

Der Schiebe- und Haltering 9 weist an seinem den Federarmen 10 abgewandten Ende einen als Griff und zur stirnseitigen Anlage am Kupplungsgehäuse 2 oder am Hilfsring 16 dienenden Flansch 25 auf. Mit Hilfe dieses Flansches 25 wird der Schiebe- und Haltering 9 aus der Kupplungsstellung links in Fig. 3 in die Freigabe-bzw. Montagestellung rechts in Fig. 3 axial verschoben.

Die Federarme 10 des Schiebe- und Halteringes 9 erstrecken sich von seiner Durchtrittsöffnung 26 parallel sowie im Abstand zur Oberfläche 27 des Kupplungsmundestückes 7. Der Vorsprung 11 am freien Ende 15 der Federarme 10 besteht aus einer armseitigen Schrägfläche 28 und einer zum freien Ende hin auswärts geneigten Schrägfläche 29, die an der Haltefläche 12 des Kupplungsmundstückes 7 anliegt. Ein einwärts gezogener Wulst 30 des Kupplungsmundstückes 7 bildet eine Rastnut, an die ein zylindrischer Abschnitt 31 anschließt, dessen Außendurchmesser geringer ist als der des greien Endes 8 des Kupplungsmundstückes 7. Über einen nach außen gewölbten Wulst 32 geht der zylindrische Abschnitt 31 in ein in Fig. 3 abgebrochen dargestellltes Verbindungsteil 33 des Kupplungsmundstückes 7 über. Die Lage des Wulstes 32 ist dabei so gewählt, daß er sich in der Kupplungsstellung gemäß Fig. 3 links in der Durchtrittsöffnung 26 des Schiebe- und Halteringes 9 befindet.

Im Bereich des freien Endes 8 weist das Kupplungsmundstück 7 schließlich noch eine weitere Ringnut 34 mit einem Dichtungsring 35 auf.

Die Abmessungen der verschiedenen Teile sind ferner so gewählt, daß sich in der Kupplungsstellung vorzugsweise ein schmaler Spalt 36 zwischen der schrägfläche 28 am Vorsprung 11 und der durch den Wulst 30 gebildeten Nutoberfläche 37 befindet (Fig. 3 links).

Schließlich sind radial nach außen gerichtete Erhebungen 37' an den Federarmen 10 angeordnet und verformen beim Auflaufen auf die Einlaufschräge 18 des Hilfsringes 16 den jeweiligen Federarm 10 leicht bogenförmig nach innen, wie auch aus Fig. 3 rechts im Bild hervorgeht. Als Werkstoff für den Schiebe- und Haltering 9 mit seinen Federarmen 10 dient ebenfalls vorzugsweise Polyamid oder Polycarbonat oder Ähnliches.

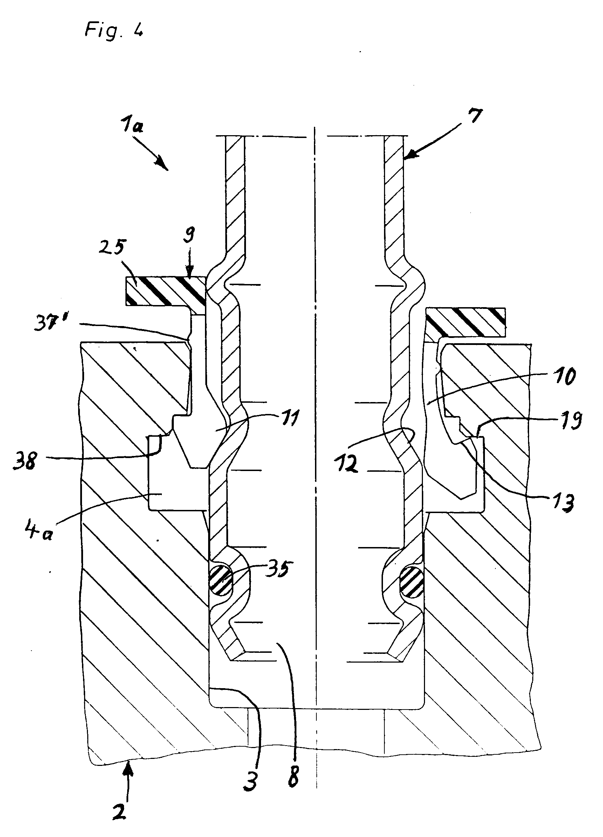

Der Hilfsring 16 besitzt nur eine herstellungstechnische Bedeutung im Rahmen der Erfindung. Seine den Federarmen 10 zugewandte Innenkontur kann gleichermaßen auch im Kupplungsgehäuse 2 bzw. dessen Bohrung 3 ausgebildet sein, wie dies für eine Steckkupplung 1a in Fig. 4 dargestellt ist, deren funktionstechnisch gleichartigen Bohrungen und Absätze bzw. Flächen dieselben Bezugszahlen aufweisen wie bei der Steckkupplung 1.

Die zusätzliche Verwendung des Hilfsringes 16 gemäß Fig. 1 erlaubt aber eine Vormontage gemäß Fig. 2 am Kupplungsmundstück 7, so daß ein Einsatz im Zusammenhang mit automatischen Einrichtungen bzw. Robotern möglich ist.

Bei der Steckkupplung 1a fehlt außer Hilfsring 16 auch die ihn aufnehmende Rastnut 6. An die im Kupplungsgehäuse 2a befindliche Bohrung 17 und den Absatz 19 schließt daher ein weiterer Absatz 38 an und begrenzt den Bohrungsteil 5.

Die Erfindung ist nicht auf die beschriebenen Ausführungsbeispiele beschränkt. Vielmehr können Einzelheiten geändert und dem jeweiligen Verwendungszweck angepaßt werden, ohne vom grundsätzlichen Erfindungsgedanken abzuweichen.

## Patentansprüche

1. Steckkupplung zum axialen Verbinden von Schläuchen, Rohren, hülsenförmigen Körpern u.dgl. mit einem Kupplungsgehäuse (2) einerseits und einem in eine abgestufte Gehäusebohrung (3) des Kupplungsgehäuses (2) axial einsteckbaren, rohrförmigen Kupplungsmundstück (7) andererseits, mit mindestens einem Dichtungsring (35) sowie mit einem axial zwischen einer Freigabestellung und einer Kupplungsstellung verschiebbaren Schiebe- und Haltering (9), der sich axial erstreckende und radial bewegbare Federarme (10) aufweist, die in einen Freiraum (4a) in der Gehäusebohrung (3) verschwenkbar sind und in der Kupplungsstellung mit radial einwärts gerichteten Vorsprüngen (11) eine radial gerichtete, zum freien Ende (8) des Kupplungsmundstückes (7) divergierende Haltefläche (12) aussen am Kupplungsmundstück (7) formschlüssig hintergreifen und sich mit einer Aussenfläche (13) zum Kupplungsgehäuse (2) hin abstützen, gekennzeichnet durch Federarme (10) mit radial einwärts auf das Kupplungsmundstück (7) hin gerichteter Federspannung aufgrund der sie formschlüssig die Halteflächen (12) hintergreifen, und durch radial nach außen gerichtete Erhebungen (37') an den Federarmen (10) zur Festlegung im gekuppelten Zustand.

2. Steckkupplung nach Anspruch 1, dadurch gekennzeichnet, dass ein Hilfsring (16) vorgesehen und zwischen dem Schiebe- und Haltering (9) einerseits und dem Kupplungsgehäuse (2) andererseits angeordnet ist.

3. Steckkupplung nach Anspruch 1 und 2, dadurch gekennzeichnet, dass der Hilfsring (16) aus einem verformbaren Kunststoff besteht.

4. Steckkupplung nach Anspruch 1, dadurch gekennzeichnet, dass sich die Federarme (10) im Abstand zur Oberfläche des Kupplungsmundstückes (7) erstrecken.

5. Steckkupplung nach Anspruch 1 - 4, dadurch gekennzeichnet, daß die Bohrung (17) des Hilfsringes (16) zumindest teilweise konisch ist.

6. Steckkupplung nach Anspruch 1 - 5, dadurch gekennzeichnet, daß das Kupplungsmundstück (7) ein freies Ende (8) mit großem Durchmesser, einen sich konisch verjüngenden Absatz mit der Haltefläche (12) und daran anschließend einen zylindrischen Abschnitt (31) mit konstantem Durchmesser aufweist.

7. Steckkupplung nach Anspruch 1 - 6, dadurch gekennzeichnet, daß die Gehäusebohrung (3) einen Absatz (4) zur Schaffung eines Freiraumes (4a) und eine Rastnut (6) zur Lagerung des Hilfsringes (16) aufweist.

8. Steckkupplung nach Anspruch 1 - 7, dadurch gekennzeichnet, daß der Hilfsring (16) an seinem Umfang eine an die Rastnut (6) angepasste Rippe (21) aufweist.

9. Steckkupplung nach Anspruch 1 - 8, dadurch gekennzeichnet, daß die Vorsprünge (11) je am freien Ende jedes Federarmes (10) des Schiebe- und Halteringes (9) eine radial einwärts gerichtete, am konischen Absatz (12) des Kupplungsmundstückes (7) anliegende Schrägfläche (29) und radial auswärts eine en einem Absatz (19) des Hilfsringes (16) formschlüssig anliegende Haltenase (20) bzw. eine radial gerichtete Außenfläche (13) aufweisen.

## Claims

1. A push-in coupling for axially connecting hoses, pipes, sleeve-shaped bodies and the like having a coupling housing (2) on the one hand and a tubular coupling nozzle (7) which can be axially inserted into a stepped bore (3) in the coupling housing (2) on the other hand, at least one sealing ring (35) and a displacement and retaining ring (9) which is axially displaceable between a release position and a coupling position and which has axially extending and radially movable spring arms (10) which are pivotable into a free space (4a) in the bore (3) in the housing and which in the coupling position positively engage with radially inwardly directed projections (11) behind a radially directed retaining surface (12) diverging towards the free end (8) of the coupling nozzle (7) on the coupling nozzle (7) on the outside thereof and which are supported with an outside surface (13) towards the coupling housing (2), characterised by spring arms (10) with a spring stress which is directed radially inwardly towards the coupling nozzle (7) and by virtue of which they positively engage behind the retaining surfaces (12), and by radially outwardly directed raised portions (37') on the spring arms (10) for fixing in the coupled condition.

2. A push-in coupling according to claim 1 characterised in that an auxiliary ring (16) is provided and is arranged between the displacement and retaining ring (9) on the one hand and the coupling housing (2) on the other hand.

3. A push-in coupling according to claim 1 and claim 2 characterised in that the auxiliary ring (16) comprises a deformable plastics material.

4. A push-in coupling according to claim 1 characterised in that the spring arms (10) extend at a spacing relative to the surface of the coupling nozzle (7).

5. A push-in coupling according to claim 1 to 4 characterised in that the bore (17) of the auxiliary ring (16) is at least partially conical.

6. A push-in coupling according to claim 1 to 5 characterised in that the coupling nozzle (7) has a free end (8) of large diameter, a conically tapering step with the retaining surface (12) and adjoining same a cylindrical portion (31) of constant diameter.

7. A push-in coupling according to claims 1 to 6 characterised in that the housing bore (3) has a step (4) for providing a free space (4a) and a retaining groove (6) for mounting the auxiliary ring (16).

8. A push-in coupling according to claims 1 to 7 characterised in that at its periphery the auxiliary ring (16) has a rib (21) which is adapted to the retaining groove (6).

9. A push-in coupling according to claims 1 to 8 characterised in that the projections (11) at the free end of each respective spring arm (10) of the displacement and retaining ring (9) have a radially inwardly directed inclined surface (29) bearing against the conical step (12) of the coupling nozzle (7) and, radially outwardly, a retaining nose (20) bearing positively against a step (19) of the auxiliary ring (16), or a radially directed outside surface (13).

## Revendications

1. Accouplement enfichable pour le raccordement axial de flexibles, tubes, corps en forme de buses et similaires, comportant, d'une part, un boîtier d'accouplement (2) et, d'autre part, une embouchure d'accouplement (7) tubulaire, insérable axialement dans un perçage de boîtier échelonne (3) du boîtier d'accouplement (2) présentant au moins un joint d'étanchéité (35) ainsi qu'un anneau curseur de blocage (9) mobile axialement entre une position de déblocage et une position d'accouplement, lequel présente des bras ressort (10) s'étendant axialement et se déplaçant radialement, qui peuvent pivoter, à l'intérieur du perçage de boîtier (3) dans un espacement (4a) et qui, en position d'accouplement, à l'extérieur de l'embouchure d'accouplement (7), s'engagent, par l'arrière, de manière crabotée, à l'aide de saillies (11) orientées radialement vers l'intérieur dans une surface de support (12) à orientation radiale, divergente vers l'extrémité libre (8) de l'embouchure d'accouplement (7), et qui prennent appui, par l'intermédiaire d'une surface externe (13), en s'orientant en direction du boîtier d'accouplement (2), caractérisé par des bras ressort (10) présentant une tension de ressort orientée vers l'embouchure d'accouplement (7), de manière radiale vers l'intérieur, de sorte qu'ils s'engagent, par l'arrière, dans les surfaces de support (12), de manière crabotée et que des élévations (37') à orientation radiale vers l'extérieur sont prévues sur les bras ressort (10) pour le maintien en position accouplée.

2. Accouplement enfichable selon la revendication 1, caractérisé en ce qu'un anneau auxiliaire (16) est prévu et est disposé entre, d'une part, l'anneau curseur de blocage (9) et, d'autre part, le boîtier d'accouplement (2).

3. Accouplement enfichable selon la revendication 1 et 2, caractérisé en ce que l'anneau auxiliaire (16) se compose d'une matière plastique déformable.

4. Accouplement enfichable selon la revendication 1, caractérisé en ce que les bras ressort (10) s'étendent à distance de la face supérieure de l'embouchure d'accouplement (7).

5. Accouplement enfichable selon la revendication 1 - 4, caractérisé en ce que le perçage (17) de l'anneau auxiliaire (16) est, au moins, partiellement conique.

6. Accouplement enfichable selon la revendication 1 - 5, caractérisé en ce que l'embouchure d'accouplement (7) présente une extrémité libre (8) de grand diamètre, un talon se terminant en cône avec la surface de support (12) et, dans la continuité, une section cylindrique (31) de diamètre constant.

7. Accouplement enfichable selon la revendication 1 - 6, caractérisé en ce que le perçage de boîtier (3) présente un talon (4) pour créer un espacement (4a) et une gorge d'arrêt (6) en vue du logement de l'anneau auxiliaire (16).

8. Accouplement enfichable selon la revendication 1 - 7, caractérisé en ce que l'anneau auxiliaire (16) présente, à sa périphérie, une nervure (21) adaptée à la gorge d'arrêt (6).

9. Accouplement enfichable selon la revendication 1 - 8, caractérisé en ce que les saillies (11) présentent, chacune, à l'extrémité libre de chaque bras ressort (10) de l'anneau curseur de blocage (9), une surface oblique (29), à orientation radiale vers l'intérieur, collée au talon conique (12) de l'embouchure d'accouplement (7) et radialement vers l'extérieur, un tenon d'arrêt (20) collé par crabotage à un talon (19) de l'anneau auxilaire (16), ainsi qu'une surface externe (13) à orientation radiale.
